# DEMANDE DE BREVET EUROPEEN

(11) **EP 0 625 385 A1**
(43) Date de publication de la demande: **23.11.1994**
(21) Numéro de dépôt: 93108259.8
(22) Date de dépôt: 21.05.1993
(51) Int. Cl.: B22C 5/08, F23G 5/08

(54) **Procédé et dispositif pour traiter thermiquement des particules contaminées**

(71) Demandeur: MAGOTTEAUX S.A., F-08320 Aubrives (FR); CRITT METALL 2T, F-54042 Nancy Cédex (FR)
(72) Inventeur: Germay, Guy, B-4630 Soumagne (BE); Sommard, Jean, F-08320 Vireux Wallerand (FR)
(74) Mandataire: Freylinger, Ernest T.

(57) **Abrégé**

La demande décrit un procédé de traitement thermique de particules contaminées dans lequel les particules contaminées sont déposées en une couche d'une épaisseur régulière, chauffées par rayonnement infrarouge, les composés organiques sont brûlés à l'aide d'un gaz contenant de l'oxygène et les particules sont calcinées.

Un dispositif pour la mise en oeuvre du procédé comprenant un système de transport (20) à vitesse réglable, un four (10) équipé d'émetteurs infrarouges (30) et d'injecteurs (48), d'un gaz contenant de l'oxygène situés à proximité de la surface de la bande de transport (20).

## Description

L'invention concerne un procédé et un dispositif pour traiter thermiquement des particules contaminées.

Les sables de fonderie contiennent des liants organiques tels que des furannes, uréthannes, phénols ou autres et/ou des liants minéraux tels que des argiles ou silicates.

La mise en décharge de ces sables usés devient de plus en plus onéreuse, d'une part, parce que de moins en moins de décharges acceptent ce genre de déchets et, d'autre part, à cause des frais de transports croissants.

Ainsi, il a été envisagé de régénérer les sables de fonderie usés. L'avantage de la régénération des sables usés est qu'on n'a plus besoin de les mettre en décharge et qu'on ménage les ressources naturelles en sables de fonderie.

Une régénération, pour être une alternative valable, doit suffire à deux critères. D'abord, la régénération doit être capable de fournir un sable régénéré qui présente les mêmes qualités que le sable de fonderie frais. Ensuite, la régénération doit être économiquement rentable.

Il existe aujourd'hui sur le marché différents types de systèmes de régénération de sable qui peuvent être regroupés en différentes catégories. Les unités mécaniques forment une de ces catégories dans laquelle on utilise une forme d'abrasion pour enlever, par exemple, un revêtement organique des grains de sable. Ainsi, par exemple, les grains de sable sont accélérés à de grandes vitesses et l'abrasion se fait par frottement des grains les uns contre les autres. Ou bien les grains de sable sont projetés contre une surface adéquate qui brise et sépare le revêtement des grains de sable. Une telle unité mécanique de régénération de sables de fonderie est, par exemple, décrite dans le brevet US 4,283,015. La deuxième catégorie est formée par les appareils de régénération thermique dans laquelle tombe aussi le dispositif de cette invention. Deux types de régénérateurs thermiques sont actuellement disponibles. D'une part, les sables de fonderie sont traités dans des réacteurs de type lit fluidifié dans lesquels les sables sont maintenus en suspension par un flux turbulent de gaz chauds contenant de l'oxygène. D'autre part, les sables à traiter sont chargée dans des fours rotatifs dans lesquels les sables sont balayés par un contre-courant ou un courant parallèle de gaz chauds contenant de l'oxygène. Les parois du four sont chauffées par exemple par des brûleurs à gaz ou à fuel. Les composés organiques sont brûlés et les sables sont calcinés.

Les dispositifs décrits ci-dessus sont équipés de certains équipements auxiliaires tels que des récupérateurs de chaleur, des dispositifs de traitement des gaz d'échappements, etc.

Un des désavantages principaux de ces systèmes de traitement de sables de fonderies est qu'ils sont exigeants en ce qui concerne la granulométrie des sables à traiter, par exemple, ils ne supportent généralement pas de pourcentage élevés en fines.

Puisque les sables sont en mouvement, leur granulométrie peut être modifiée par abrasion des grains de sables qui se frottent les uns contre les autres et/ou contre les parois. De plus, une ségrégation de différentes tailles de grains peut se produire.

Le but de la présente invention est de proposer un procédé pour traiter thermiquement des particules contaminées qui peut s'accommoder d'une grande variété de granulométrie différentes.

Pour atteindre cet objectif, la présente invention prévoit un procédé de traitement thermique de particules contaminées caractérisé en ce que les particules sont déposées en une couche d'une épaisseur régulière, transportées à vitesse régulière et modulable à travers un four dans lequel elles sont chauffées par des rayonnements infrarouges et en ce qu'un gaz contenant de l'oxygène est injecté à proximité de la couche de particules à traiter de sorte à brûler la matière organique et/ou à calciner les particules.

Un des avantages principaux de ce procédé est qu'il peut accepter toutes les granulométries allant du sable grossier jusqu'aux particules fines récoltées par des filtres.

En effet, puisque le produit à traiter est déposé en une couche d'une épaisseur régulière et transporté à travers un four sans être tassé ni traversé par un courant de gaz, la granulométrie du produit à traiter n'a pas d'importance. Il suffit d'adapter le temps de séjour dans le four et éventuellement l'épaisseur de la couche déposée.

Même des mélanges de produits a granulométries différentes peuvent être traités par ce procédé. Puisque le produit à traiter n'est pas soumis à des turbulences, aucune ségrégation des granulométries différentes n'est à craindre. Ceci est très important car lors du décochage de la pièce coulée de son moule, une partie non négligeable de particules fines est générée. Les particules fines contaminées sont très difficiles à traiter avec les systèmes conventionnels et leur mise en décharge est particulièrement onéreuse. Les particules fines peuvent donc être traitées avec les sables contaminés en une étape sans qu'il ne soit nécessaire de faire une séparation. Les particules fines peuvent aussi, si nécessaire, être traitées séparément par le même procédé et être rendues inerte. Elles peuvent être mises en décharge à moindre frais, si cela est nécessaire. Le présent procédé peut donc aussi être utilisé pour rendre inerte des particules et ne sert donc pas uniquement à la régénération de sables de fonderie usés.

Préférablement, les gaz d'échappement sont extraits du four d'une manière réglable et les composés non désirables tels que les oxydes de carbone, d'azote et de soufre, les hydrocarbures, l'oxygène, etc sont dosés.

La conduite du procédé peut alors être optimisée en fonction des résultats d'analyses obtenus en modifiant par exemple le temps de séjour des particules à l'intérieur du four, la température atteinte par les particules à traiter, le débit de gaz contenant de l'oxygène, le débit des gaz d'échappement, etc.

Selon un autre aspect de la présente invention, on procure aussi un dispositif pour la mise en oeuvre du procédé selon l'invention.

Le dispositif pour la mise en oeuvre du procédé selon la présente invention est caractérisée par un système de transport sur lequel les particules contaminées sont déposées en une couche d'une épaisseur et d'une densité régulière, des moyens pour faire avancer à vitesse régulière et modulable le système de transport dans un four qui est équipé d'un ou plusieurs émetteurs infrarouges, d'une ou plusieurs fentes ou injecteurs réglables d'un gaz contenant de l'oxygène situé à proximité de la surface du système de transport.

L'introduction du gaz contenant de l'oxygène se fera de préférence le plus près possible de la couche de produit en veillant à ne pas créer des turbulences pouvant soulever le produit déposé sur le système de transport.

Un des avantages principaux de ce dispositif est que le temps du traitement peut facilement être modulé en variant le temps de séjour dans le four par le biais de la vitesse d'avancement du système de transport.

Préférablement, le dispositif est équipé d'un couloir vibrant doseur repartiteur à l'aide duquel on dépose les particules à traiter sur le système de transport. De cette manière, les particules sont déposées efficacement en une couche d'une épaisseur et d'une densité présélectionnable.

Un autre avantage de ce dispositif est qu'on peut le vider rapidement en vidant le couloir vibrateur et le système de transport. On peut donc passer aisément d'une qualité de produit à traiter vers un autre produit sans que les produits ne soient mélangés.

Le four peut, selon un autre mode de réalisation avantageux être équipé d'une ou plusieurs fentes modulables d'évacuation des gaz d'échappement. Ces fentes se situent, de préférence, sur un ou deux côtés latéraux à hauteur des émetteurs. Elles sont, de préférence, réglables séparément, par exemple par des volets.

Selon encore un autre mode de réalisation avantageux, le four comprend une sole située en-dessous de la bande de transport et qui forme un support pour la bande.

Selon un autre mode de réalisation préféré, un chauffage indépendant est installé en-dessous de la sole qui maintient celui-ci à une température élevée de préférence entre 200°C et 1000°C. De cette manière, on peut augmenter l'efficacité du chauffage par infrarouges, éviter des déperditions calorifiques vers le bas au travers du système de transport, diminuer d'une manière significative le temps de séjour dans le four et augmenter la capacité de traitement du four. La sole comprend préférentiellement une tôle lisse en acier réfractaire.

Avantageusement, le système de transport comprend une bande de transport en fibres en céramique. Ces fibres sont très solides et résistent à des températures élevées. Le système de transport peut aussi comprendre un tapis à écailles, de l'acier réfractaire ou bien des coquilles. L'homme de métier pourra choisir parmi un grand nombre de systèmes de transport et de matériaux utilisables en fonction de la charge, des températures utilisées et de la taille du dispositif de traitement.

Selon une autre exécution préférentielle, un système d'analyse mesure en permanence la concentration de certains composés non désirés comme, par exemple, le monoxyde de carbone, le dioxyde de carbone, l'oxygène, les oxydes d'azote, le dioxyde de soufre, le benzène et/ou les hydrocarbures.

Les réglages de l'alimentation des émetteurs d'infrarouges, des injecteurs d'un gaz contenant de l'oxygène, des fentes d'évacuation des gaz d'échappement sont avantageusement adaptés en fonction des résultats d'analyse des gaz d'échappement.

L'homme de l'art comprendra facilement que ce dispositif peut aussi être utilisé pour le traitement d'autres particules contaminées telles que des poussières de filtres, etc.

D'autres particularités et caractéristiques ressortiront de la description d'un mode de réalisation préférée présenté ci-dessous, à titre d'exemple en se référant à la figure annexée.

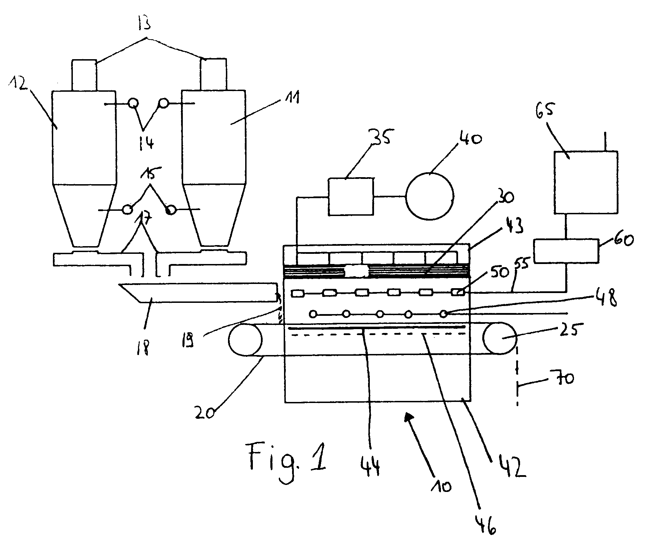

La Figure 1 est une vue d'ensemble d'un dispositif de traitement thermique de particules contaminées.

On voit, sur la Figure 1, un four 10 de traitement de particules contaminées.

Avant d'être introduit dans le four 10, le sable de fonderie est traité mécaniquement, puis soumis à une séparation selon la granulométrie. Une grande partie (environ 70%) pourra être réutilisé telle quelle. La partie du sable venant du décochage qui est trop polluée pour être utilisée directement doit être régénérée thermiquement. Les matériaux à traiter (sables, fines de filtres, etc) sont stockés dans un ou plusieurs silos (11, 12) dans l'attente d'être traité dans le four 10. Les silos 11, 12 sont de préférence équipés de filtres statiques 13 ainsi que des sondes de niveau maximal 14 et des sondes de niveau minimal 15 pour éviter tout disfonctionnement de l'installation.

Le sable à traiter, issu des silos de stockage 11, 12, est déversé moyennant une vis doseuse dans un couloir vibrant doseur répartiteur 18. L'utilisation du couloir vibrant 18 permet de déposer le sable à traiter 19 en une couche d'une épaisseur et d'une densité régulières sur une bande de transport 20. Cette bande de transport 20 est entraîné par un moteur 25 équipé d'un réducteur et alimenté par un variateur de fréquence de façon à pouvoir régler d'une manière précise la vitesse de défilement de la bande 20.

La bande de transport 20, de préférence en fibres céramiques, fait passer le sable à traiter 19 dans le four 10 qui est équipé d'un ou plusieurs émetteurs infrarouges 30. Ces émetteurs 30 sont équipés d'un système de régulation 35 performant. Ils sont reliés à une alimentation 40 en énergie.

Ces émetteurs 30 peuvent soit fonctionner au gaz soit à l'électricité.

Vu leur puissance unitaire élevée et vu leur grande fiabilité, des émetteurs d'infrarouge 30 alimentés au gaz sont préférés.

Ces émetteurs infrarouges 30 comprennent des plaquettes alvéolaires en céramique et des injecteurs. Le gaz, par exemple du méthane, du butane ou du propane, est amené dans le système de régulation où il est mélangé à de l'air. Le mélange sort par des multiples petits orifices aménagés dans les plaquettes en céramique et la combustion du mélange se fait à la surface de ces plaquettes qui sont portées à une température entre 500°C et 1300°C. La puissance des brûleurs est réglée via le rapport air-gaz dans le mélange qui permet de varier la puissance entre 50% et 100% de la puissance nominale. Il est important de disposer d'émetteurs 30 efficaces et fiables qui irradient uniformément toute la surface du produit à traiter.

Les rayons infrarouges, émis par les émetteurs 30, chauffent le sable 19 déposé sur la bande de transport 20 d'une manière uniforme tout au long de son parcours à travers le four 10 à une température finale comprise entre 200°C et 1000°C.

Le four 10 est garni de réfractaire 42 et a une voûte amovible 43 permettant un accès aisé aux émetteurs infrarouges 30 lors de l'entretien.

Le four 10 comprend une sole 44 qui forme un support pour la bande de transport 20. Le support, en acier réfractaire lisse, est porté et maintenu à une température comprise entre 200°C et 1000°C par des résistances électriques 46 indépendantes situées en-dessous du support. L'efficacité du chauffage par infrarouge est ainsi augmentée et les déperditions calorifiques par le bas, au travers de la bande de transport, sont minimisés.

De l'air ou de l'oxygène est introduit dans le four à proximité de la surface du produit à traiter au moyen d'injecteurs ou de fentes 48 réglables. L'introduction de l'air ou de l'oxygène se fera le plus près possible de la couche de sable à traiter 19 tout en évitant que le courant d'air n'engendre des turbulences pouvant soulever le produit à traiter. La régulation du débit d'air ou d'oxygène se fait de deux manières. D'abord, chaque fente ou injecteur est équipé d'un préréglage manuel. Ensuite, la pression, et par conséquent le débit qui est proportionnel à la pression pour un réglage donné, est adaptée en fonction des analyses des gaz d'échappement.

Tous les résidus organiques contenus dans le sable sont brûlés et le sable 19 est calciné. Les gaz d'échappement générés lors de cette combustion sont évacués en-dehors du four 10 via des fentes 50 d'aspiration aménagées dans le four 10. Ces fentes 50 sont installées sur la face latérale ou sur les deux faces latérales à hauteur des émetteurs 30. Toutes ces fentes 50 sont réglables séparément par des volets.

Moyennant un conduit 55 et un ventilateur d'extraction réglable, les gaz d'échappement sont amenés, après avoir été filtrés et séchés, vers un dispositif d'analyse 60 qui mesure la concentration en certains composés non désirables.

Ainsi la concentration en oxygène dans les gaz d'échappement est mesurée à l'aide d'une sonde en oxyde de zirconium. Le monoxyde de carbone et le dioxyde de carbone sont quantifiés par une analyse aux infrarouges. La concentration en dioxyde de soufre peut être déterminée par des rayons ultraviolets. Les oxydes d'azote et les hydrocarbures sont dosés par chimiluminescence respectivement par ionisation de flamme. Toutes ces analyses sont, de préférence, effectuées en continu.

L'intensité des rayonnements infrarouges, le débit d'air introduit, la vitesse de défilement de la bande de transport et/ou l'évacuation des fumées sont réglées en fonction des concentrations en éléments non désirables.

Les gaz d'échappement sont traités dans une unité 65 de post-combustion où tous les composés contenant du carbone sont oxydés jusqu'au dioxyde de carbone. L'unité 65 de post-combustion consiste en un carneau en matériaux réfractaires avec des chicanes. Les matériaux réfractaires sont maintenus à température élevée, environ 1200°C par un brûleur à gaz indépendant. Les gaz d'échappement sont réchauffés par contact avec les matériaux réfractaires et tous les composés contenant du carbone sont détruits.

A la sortie de la chambre de post-combustion 65, les gaz d'échappement sont soumis à un refroidissement dans un échangeur (non représenté). La chaleur récupérée peut servir à préchauffer l'air ou l'oxygène introduit dans le four 10 et/ou à chauffer des locaux. Après dépoussiérage, les gaz d'échappement sont libérés dans l'atmosphère.

Le sable traité 70 peut être refroidi à la sortie du four 10, par exemple dans un refroidisseur de type "lit fluidifié" (non représenté). Le sable chaud 70 est maintenu en suspension par un courant d'air traversant toute l'épaisseur du lit. L'air injecté dépoussière le sable 70 et le refroidit. L'efficacité du refroidissement est améliorée par un échangeur tubulaire qui se situe dans le lit fluidifié et qui est alimenté par de l'eau froide. De cette manière, il est possible d'obtenir un sable à la sortie du refroidisseur, à une température de 25°C ± 3°C.

## Revendications

1. Procédé de traitement thermique de particules contaminées caractérisé en ce que les particules sont déposées en une couche d'une épaisseur régulière, transportées à vitesse régulière et modulable à travers un four (10) dans lequel elles sont chauffées par des rayonnements infrarouges et en ce qu'un gaz contenant de l'oxygène est injecté à proximité de la couche de particules à traiter de sorte à brûler la matière organique et/ou à calciner les particules.

2. Procédé selon la revendication 1, caractérisé en ce que les gaz d'échappement sont extraits du four (10) d'une manière réglable et en ce que des composés non désirables sont dosés.

3. Procédé selon l'une quelconque des revendications 1 ou 2, caractérisé en ce que le temps de séjour des particules à l'intérieur du four (10), la température des particules, le débit du gaz contenant de l'oxygène et/ou le débit des gaz d'échappement sont réglés en fonction des résultats des analyses des gaz d'échappement.

4. Procédé selon l'une quelconque des revendications 1 à 3, caractérisé en ce que les particules sont chauffées au moins à 200°C.

5. Procédé selon l'une quelconque des revendications 1 à 4, caractérisé en ce que les particules sont chauffées à une température comprise entre 200°C et 1000°C.

6. Dispositif de traitement thermique de particules contaminées, caractérisé par un système de transport (20) sur laquelle les particules contaminées sont déposées en une couche d'une épaisseur et d'une densité régulière, des moyens (25) pour faire avancer à vitesse régulière et modulable le système de transport (20) dans un four (10) qui est équipé d'un ou plusieurs émetteurs infrarouges (30), d'une ou plusieurs fentes ou injecteurs réglables (48) d'un gaz contenant de l'oxygène situé à proximité de la surface du système de transport (20).

7. Dispositif selon la revendication 6, caractérisé par un couloir vibrant doseur répartiteur (18) qui effectue le dépôt des particules sur le système de transport (20).

8. Dispositif selon l'une quelconque des revendications 6 ou 7, caractérisé par une ou plusieurs fentes (50) d'évacuation des gaz d'échappement réglables individuellement.

9. Dispositif selon l'une quelconque des revendications 6 à 8, caractérisé par une sole (44) située en-dessous de la bande de transport (20).

10. Dispositif selon l'une quelconque des revendications 6 à 9, caractérisé en ce que la sole (44) est chauffable par un système de chauffe indépendant (46).

11. Dispositif selon l'une quelconque des revendications 6 à 10, caractérisé en ce que la sole (44) comprend une tôle en acier réfractaire lisse.

12. Dispositif selon l'une quelconque des revendications 6 à 11, caractérisé par un caisson (43) amovible formant le toit du four (10) et facilitant l'accès aux radiants infrarouges.

13. Dispositif selon l'une quelconque des revendications 6 à 12, caractérisé en ce que le système de transport (20) comprend une bande de transport en fibres céramiques.

14. Dispositif selon l'une quelconque des revendications 6 à 13, caractérisé en ce que le système de transport (20) comprend de l'acier réfractaire.

15. Dispositif selon l'une quelconque des revendications 6 à 14, caractérisé en ce que le système de transport (20) comprend des coquilles.

16. Dispositif selon l'une quelconque des revendications 6 à 15 caractérisé par des moyens de réglage (35) de l'alimentation des émetteurs d'infrarouges (30), des moyens de réglage des injecteurs (48), d'un gaz contenant de l'oxygène, des moyens de réglage des fentes (50) d'évacuation réglés par des signaux issus d'un dispositif d'analyse des gaz d'échappement.
